# EUROPEAN PATENT APPLICATION

(11) **EP 2 432 090 A1**
(43) Date of publication of application: **21.03.2012**
(21) Application number: 11182023.9
(22) Date of filing: 20.09.2011
(51) Int. Cl.: H02G 3/04, H02G 3/38

(54) **Cable with a split tube and method for making the same**

(30) Priority: 21.09.2010 US 384978 P
(71) Applicant: General Cable Technologies Corporation, Highland Heights, KY 41076 (US)
(72) Inventor: Camp II, David P., Florence, KY Kentucky 41042 (US); Brown, Scott M., Independence, KY Kentucky 41051 (US)
(74) Representative: Lord, Michael

(57) **Abstract**

A cable that comprises a cable core that includes a plurality of twisted wire pairs and each wire of the pairs is insulated. A separating layer surrounds at least one pair of the plurality of twisted wire pairs. The separating layer is a tube with a longitudinal split therein.

## Description

### Related Application

This application claims priority under 35 U.S.C. § 119 to U.S. provisional application no. 61/384,978, the subject matter of which is hereby incorporated by reference.

### Field of the Invention

A cable that uses a split tube applied over cable elements that require separation and isolation, such as wire pairs and the like. The split tube may be extruded separately from the other cable components, particularly the wire pairs, thereby reducing the risk of damage to the wire pairs during the extrusion process.

### Background of the Invention

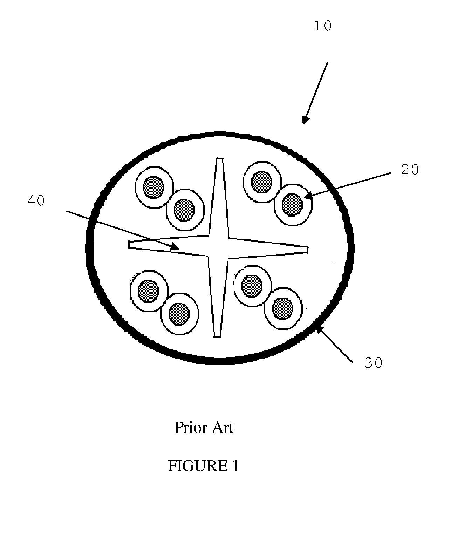

As seen in FIG. 1, a conventional communication cable 10 typically includes a number of insulated wires that are twisted together in pairs 20 and surrounded by an outer jacket 30. Often, a crossweb 40 is added to the cable core to provide electrical isolation between the wire pairs to reduce interference or crosstalk. Crosstalk often occurs because of electromagnetic coupling between the twisted pairs within the cable or other components in the cable.

Conventional cables are typically made by first fabricating the individual components, such as the twisted pairs and other elements. These components are then combined together at an assembly operation, where typically another overall twist is also applied to form the cable core. An overall extruded jacket is then applied. When a conventional cable uses another element, such as the crossweb 40 discussed above, the pairs are separated from the interference of the other pairs within the cable; however the pairs are still susceptible to the transient affects of the overall jacket. Typically, overall jackets are made with poly-vinyl chloride or PVDF compounds loaded with flame retardants and smoke suppressants to meet regulatory flame and smoke requirements for fire safety. These jacket materials often have poor dissipative properties, which cause the signal traveling along the pair to be excessively attenuated. Below is a table listing the typical materials used in communication cable construction. HDPE, FEP and MFA are typically used for the insulation coating on wire and crosswebs, while PVDF and FRPVC are typically used for an overall cable jacket.

| Material | Typical Dissipation |
|---|---|
| | Factor @ 1 MHz. |
| HDPE (High Density Polyethylene) | .0004 |
| FEP (copolymer of tetrafluoroethylene and hexafluoropropylene) | .0005 |
| MFA (perfluoropolymer) | .0002 |
| PVDF (Polyvinylidene fluoride) | .0800 |
| FRPVC (polyvinylchloride with flame retardants) | .0400 |

Thus, even if a crossweb is used, the pairs are still exposed to the affects of the relatively higher dissipation factor of overall cable jacket.

Moreover, the manufacturing process exposes the wire pairs to risk of damage due to, for example, scraping the outer surface of the pair, unraveling or altering the twist of the pairs and possibly stretching the conductor of the pairs. The affects of these types of damage cause poor performance in required communication cable parameters such as return loss, insertion loss, pair to pair crosstalk and pair balance properties such as transverse conversion loss.

### Summary of the Invention

Accordingly, the present invention provides a cable that includes a cable core that has a plurality of twisted wire pairs. Each wire of the pairs is insulated. A separating layer surrounds at least one pair of the plurality of twisted wire pairs. The separating layer may be a tube with a longitudinal split therein. In accordance with one embodiment, the tube may be formed of a dielectric material. In accordance with another embodiment, the tube may be coated with a conductive material. In yet another embodiment of the invention, a shielding layer may be added to the tube. In still another embodiment of the invention, the tube may be a mixture of dielectric and conductive materials.

The present invention also provides a method of constructing a cable that comprises the steps of providing a plurality of wires; extruding insulation over each of the individual wires; twisting the wires into a plurality of wire pairs after the extrusion of insulation of the individual wires; extruding a tube wherein the extrusion of the tube is separate from the extrusion of the insulation over the individual wires; and applying the tube to at least one of the twisted wire pairs.

Other objects, advantages and salient features of the invention will become apparent from the following detailed description, which, taken in conjunction with the annexed drawings, discloses a preferred embodiment of the present invention.

### Brief Description of the Drawing

A more complete appreciation of the invention and many of the attendant advantages thereof will be readily obtained as the same becomes better understood by reference to the following detailed description when considered in connection with the accompanying drawings.

FIG. 1 is a cross-sectional view of a prior art cable;

FIG. 2A is a cross-sectional view of a cable, showing a separating tube according to a first exemplary embodiment of the present invention surrounding at least one twisted wire pair of the cable;

FIG. 2B is a cross-sectional view of a wire pair of the cable illustrated in FIG. 2A, showing the wire pair enclosed by the tube;

FIG. 3A is a cross-sectional view of cable, showing a separating tube according to a second exemplary embodiment of the present invention surrounding at least one twisted wire pair of the cable;

FIG. 3B is a cross-sectional view of a wire pair of the cable illustrated FIG. 3A, showing the wire pair enclosed by the tube;

FIG. 4A is a cross-sectional view of cable, showing a separating tube according to a third exemplary embodiment of the present invention surrounding at least one twisted wire pair of the cable;

FIG. 4B is a cross-sectional view of a wire pair of the cable illustrated FIG. 4A, showing the wire pair enclosed by the tube;

FIG. 5 is a cross-sectional view of a wire pair surrounded by a separating tube according to a fourth exemplary embodiment of the present invention; and

FIGS. 6A and 6B are cross-sectional views of a wire pair surrounded by a separating tube according to a fifth exemplary embodiment of the present invention.

### Detailed Description of the Invention

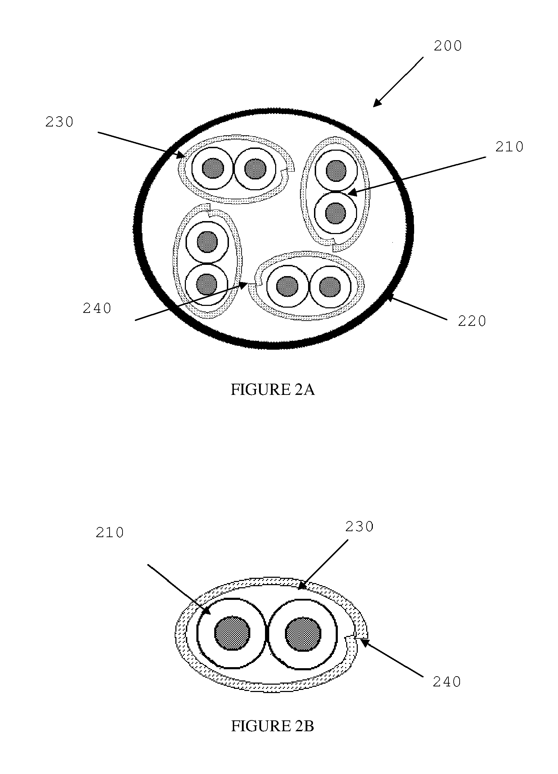

Referring to FIGS. 2A, 2B, 3A, 3B, 4A, 4B, 5A, 5B, 6A and 6B, the present invention solves the problems of the conventional cable construction by providing a separating layer, such as a split tube 230, that surrounds at least one, and preferably each of the wire pairs. For example, the separating split tube addresses the problem of damage during the manufacturing process because it can be manufactured separately from the other cable components. Each split tube can then be formed around a respective wire pair during the cable core assembly operation. If the cable core does not require an overall cable twist, the components can be pulled directly into the finished overall cable jacket without an interim assembly operation. Another advantage of split tube is that the split tube holds a generally round profile around the wire pair itself and does not collapse on the pair. A more rounded separator layer allows more air around the pair which further improves the dissipative properties of the pair with respect to the surrounding insulating layer which consequently improves the insertion loss performance of the pair. Also, the use of a separating layer, such as the split tube, which completely or substantially surrounds each pair and is made of a material that has good dissipative properties, insulates the pair from the negative affects of the overall jacket.

Referring to the FIGS. 2A and 2B, a cable 200 according to a first exemplary embodiment of the present invention includes a plurality of wire pairs 210 forming a cable core and a jacket 220 that encloses the cable core. Each wire pair 210 includes two wires that are individually insulated and twisted together, as is well known in the art.

A separating layer 230 surrounds at least one wire pair 210, thereby providing a barrier for electrical isolation from the remaining wire pairs. Preferably, each of the wire pairs 210 is surrounded by a separating layer 230 to provide maximum protection against crosstalk. The separating layer 230 is preferably a tube that completely surrounds the wire pair. The tube may include a longitudinal split 240 therein. As seen in FIG. 2B, ends of the separating layer 230 may overlap at the split 240. Alternatively, there may be a gap between the ends of the separating layer 230 such that the separating layer substantially surrounds the wire pair. By using the separating layer 230 to isolate the pairs, the crossweb 40 (FIG. 1) of the prior art cable can be eliminated. Elimination of the cross web 40 significantly reduces the size of the cable.

The separating layer or tube 230 is preferably formed of a dielectric material that may be solid or foam and preferably has good dissipative properties. The dielectric material preferably has a dissipation factor less than 0.001. Because the separating layer 230 surrounds each wire pair with a material having good dissipative properties, each pair is protected from the negative affects of the overall cable jacket, that is excessive attenuation of the pair. For example, the tube 230 may be formed of a polyolefin, such as polypropylene or polyethylene, or a fluoropolymer, such as FEP, ECTFE, MFA, PFA and PTFE. The tube 230 may be wrapped around one or more of the wire pairs 210 by inserting the pairs through the longitudinal split 240 of the tube. To avoid damage to the wire pairs 210 and their insulation during extrusion of the cable, the separating tube 230 is preferably extruded separately from the cable 200 and its wire pairs 210. The separating tube 230 is then split. In other words, for the wire pair or pairs that are to be received in the tube 230, they will be extruded separately from the tube or tubes 230. Thus, once the insulation for the wire pairs has been extruded on the individual wires and the wires have been twisted, one or more tubes 230 may be applied to one or more wire pairs, respectively, to provide sufficient crosstalk isolation between the pairs.

As describe above, the tube 230 may be applied to any number of the pairs 210 of the cable including to just one pair or all of the plurality of pairs. By using one or more tubes 230 as barriers between the pairs 210, interference from capacitive coupling is significantly reduced, because the pair or pairs are completely surrounded by the tube. By reducing interference, the electrical characteristics, such as near end crosstalk, insertion loss and return loss of the pairs of cable 200 are significantly improved.

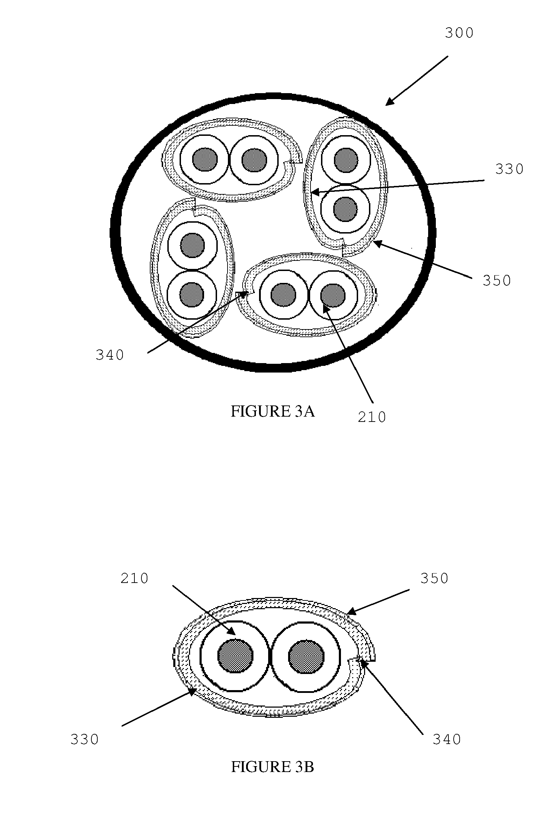

As seen in FIGS. 3A and 3B, a cable 300 according to a second exemplary embodiment of the present invention is similar to the first embodiment, except the separating layer or tube 330 includes a conductive coating 350 (FIG. 3B) on its outer surface. Like the first embodiment, the separating tube 330 preferably surrounds at least one wire pair 210 to provide a barrier for reducing crosstalk between pairs and electromagnetic interference from sources outside the cable. The conductive coating 350 provides shielding for the wire pair 210. The coating 350 may include conductive particles that are, for example, iron oxides, nickel, zinc, silver, carbon and the like. The coating 350 may be directly applied to the tube 330 or may be contained in a flexible adhesive, such as a UV curable acryolate. The separating tube 330 includes a longitudinal split 340 (FIG. 3B).

Because the tube 330 is formed separately from the remaining components of the cable 300, in the same manner as described above with respect to the first embodiment, the conductive coating 350 may be easily added to the outer surface of the tube 330 before the tube 330 is applied to the wire pair or pairs 210.

Another advantage to using the tube with the conductive coating 350 is the reduced size of the individual insulated conductors in the pair 210. In particular, when the separating layer or tube 330 includes the conductive coating 350, the separating layer or tube 330 preferably has a thickness that is at least 25% of the insulation thickness of the individual conductors in the pair 210. Thus, the overall size of the pair 210 with the tube 330 and coating 350 is smaller than a conventional cable pair of the same impedance.

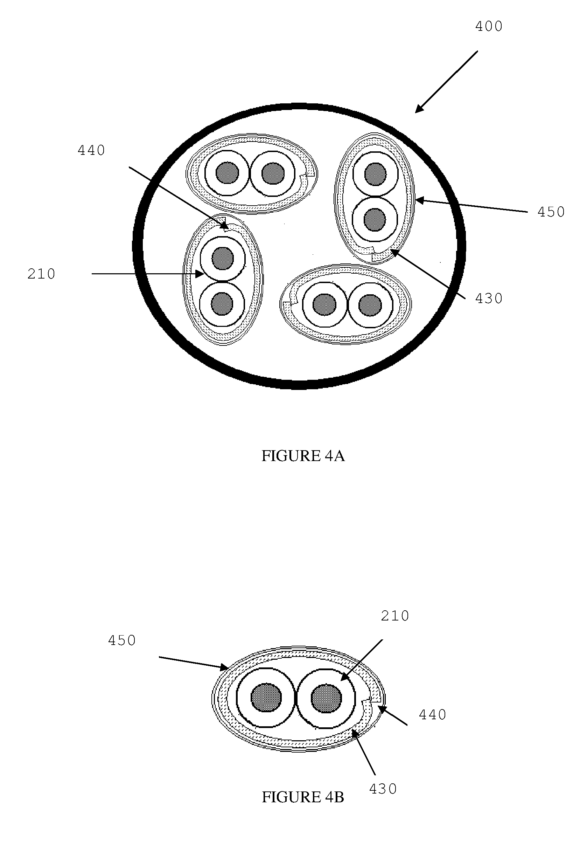

FIGS. 4A and 4B illustrate a cable 400 according to a third exemplary embodiment of the present invention that is similar to the first embodiment, except that a shielding layer 450 is applied to the outer surface of the separating tube 430. As with the first and second embodiments, the separating layer 430 surrounds one or more wire pairs 210 for reducing crosstalk. The shielding layer 450 may be a foil layer, for example, wrapped around a dielectric tube 430. The separating tube 430 includes a longitudinal split 440 therein and the shielding layer 450 wraps around the split 440 (FIG. 4B).

Because the tube 430 is formed separately from the remaining components of the cable 400, the shielding layer 450 may be easily wrapped around the tube 430. The shielding layer 450 may be foils or screen printed layers containing alloys or mixtures of conductive elements, such as iron oxides, nickel, zinc, silver, carbon and the like. Again, elimination of the cross web 40 significantly reduces the size of the cable. Moreover, the separating tube 430 and shielding layer 450 of the present invention more effectively isolates the wire pairs than a crossweb. That in turn allows less, i.e. not as thick, insulation to be used to insulate each conductor, which also contributes to the overall reduction in size of the cable. That is, like the tube 330, the thickness of the tube 430 is preferably at least 25% of the insulation thickness of the individual conductors, thereby allowing a reduction in the conductor insulation thickness and thus reducing the size or diameter of the pair. By reducing interference, the cable can accommodate high data transmission speeds, such as in 40Gb/s Ethernet applications, and has an improved performance.

As an alternative to adding the conductive coating, as in the second embodiment, or the shielding layer of the third embodiment to the dielectric tube, a conductive material or particles may be infused into the dielectric material of the tube. That creates a conductive or semi-conductive tube that provides shielding without the added a coating or shielding layer. For example, the separating tube may be formed of a poly-olefin, such as polypropylene or polyethylene, or a fluoropolymer, such as FEP, ECTFE, MFA, PFA and PTFE, that contains conductive particles such as, aluminum, copper, iron oxides, nickel, zinc, silver and metallic coated carbon or graphite nano-fibers.

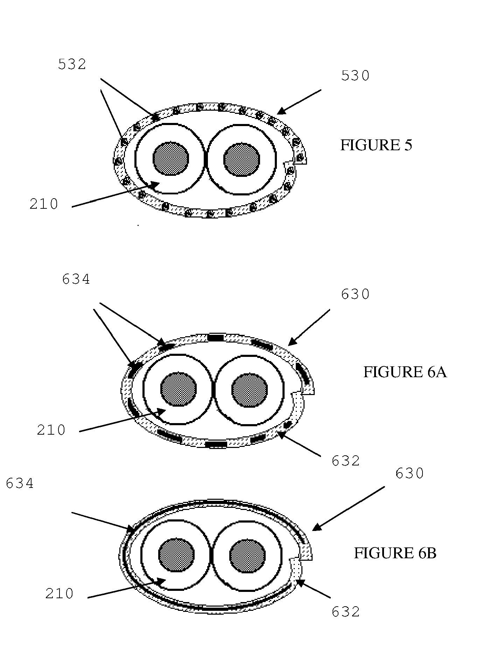

FIG. 5 illustrates yet another embodiment of a separating split tube 530 that is substantially similar to split tube 230 of the first embodiment, except that the dielectric material of the tube 530 includes fiberglass. In particular, woven or non-woven strands of fiberglass 532 are preferably added to the split tube. Such fiberglass strands 532 can be also be added to the other split tubes 330 and 430. The fiberglass strands 532 improve the flame and smoke properties of the tube. Fiberglass is typically neutral when compared to the flame and smoke properties of dielectric materials, such as fluoropolymers and olefins. The neutral fiberglass strands displace some of the dielectric material of the tube.

FIGS. 6A and 6B illustrate still another embodiment of a separating tube 630 that is similar to split tube 230 of the first embodiment, except that the dielectric material of the tube 630 may include different types of dielectric material and/or multiple layers of different dielectric materials. For example, the tube 630 may include a main layer 632 that is formed of a first dielectric material. A second dielectric material 634 is embedded in the main layer 632. The second dielectric material 634 may be formed in discrete sections (FIG. 6A) or as a second layer (FIG. 6B) in the tube 630. For example, the second dielectric material 634 may be an olefin that replaces some of the more expensive fluoropolymer of the main layer 632 of the tube, thereby saving costs. Use of different dielectric materials, such as olefins and fluoropolymers, also helps to balance the smoke and flame properties of the cable to achieve compliance with NFPA 262 plenum test (maximum smoke requirement and maximum requirement for flame travel along a cable). Olefins and fluoropolymers, for example, both can have good electrical properties. Fluoropolymers typically smoke less over time and reduce flame travel more than pure olefins. However, in some cases, olefins can be more heavily loaded (blended) with flame retardants to stop flame travel along the cable. Thus, in the cable construction of the present invention, a more flame retardant cable may be achieved by adding heavily loaded olefins to the split tubes. Also, there are two components to the smoke test average smoke density and peak density. Fluoropolymers tend to smoke more immediately after the initial contact with the flame during the test where olefins smoke more evenly throughout the test. The peak smoke at the beginning of the test can be managed by adding olefins to the split tubes.

While particular embodiments have been chosen to illustrate the invention, it will be understood by those skilled in the art that various changes and modifications can be made therein without departing from the scope of the invention as defined in the appended claims. For example, although four pairs are illustrated, any number of wire pairs may be used with the cable of the present invention. And the tube of any of the embodiments may be applied to one or more of the pairs. Also, the tube of any of the embodiments may be applied to other cable components, including a jacket around the entire cable core.

## Claims

1. A cable, comprising
a cable core, including,
a plurality of twisted wire pairs, each wire of said pairs being insulated, and
a separating layer surrounding at least one pair of said plurality of twisted wire pairs, said separating layer being a tube with a longitudinal split therein.

2. A cable according to claim 1, wherein
said separating layer is formed of a dielectric material.

3. A cable according to claim 2, wherein
said dielectric material is a polyolefin or a fluoropolymer.

4. A cable according to claim 2, wherein
said dielectric material has a dissipation factor less than 0.001.

5. A cable according to claim 2, wherein
said dielectric material includes fiber glass strands.

6. A cable according to claim 1, wherein
said separating layer is formed of at least two different dielectric materials.

7. A cable according to claim 6, wherein
said dielectric materials are a polyolefin and a fluoropolymer.

8. A cable according to claim 7, wherein
at least one of said dielectric materials has a dissipation factor less than 0.001.

9. A cable according to claim 1, wherein
said separating layer is formed of multiple layers of dielectric material.

10. A cable according to claim 9, wherein
at least one said layers of dielectric material has a dissipation factor less than 0.001.

11. A cable according to claim 1, wherein
said separating layer has a conductive coating on a surface thereof.

12. A cable according to claim 11, wherein
said conductive coating includes conductive particles.

13. A cable according to claim 12, wherein
said conductive particles are selected from the group consisting of aluminum, copper, iron oxides, nickel, zinc, silver and carbon nano-fibers.

14. A cable according to claim 1, wherein
the thickness of said separating layer is at least 25% of the thickness of the insulation of the each wire.

15. A cable according to claim 1, wherein
said separating layer has a shielding layer surrounding a surface thereof.

16. A cable according to claim 15, wherein
said shielding layer is foil.

17. A cable according to claim 15, wherein
said shielding layer is a screen printed substrate wrapped around the tube.

18. A cable according to claim 1, wherein
said separating layer is a mixture of dielectric and conductive materials.

19. A cable according to claim 1, wherein
ends of said separating layer overlap at said longitudinal split.

20. A cable according to claim 1, wherein
ends of said separating layer are spaced at said longitudinal split.

21. A cable according to claim 1, wherein
a jacket encloses said plurality of wire pairs.

22. A cable according to claim 1, wherein
a separating layer surrounds each of said wire pairs, each of said separating layers is a tube with a longitudinal split.

23. A method of constructing a cable, comprising the steps of providing a plurality of wires;
extruding insulation over each of the individual wires;
twisting the wires into a plurality of wire pairs after the extrusion of the insulation of the individual wires over the pairs;
extruding a tube wherein the extrusion of the tube is separate from the extrusion of the insulation over the individual wires; and
applying the tube over at least one of the twisted wire pairs.

24. A method according to claim 23, further comprising the step of:
cutting the tube to provide a longitudinal split therein.

25. A method according to claim 23, further comprising the step of:
providing a jacket around the plurality of twisted wire pairs.

26. A method according to claim 23, further comprising the step of:
coating an outer surface of the tube with a conductive material.

27. A method according to claim 23, further comprising the step of adding a shielding layer to an outer surface of the tube.

28. A method according to claim 23, wherein
the tube is formed of a polyolefin or a fluoropolymer.

29. A method according to claim 23, wherein
the tube is formed of a mixture of dielectric and conductive materials.

30. A method according to claim 23, further comprising the step of extruding a plurality of tubes separate from the extrusion of the insulation over the individual wires; and
applying each tube to a wire pair.

31. A method according to claim 30, further comprising the step of cutting of the plurality of tubes to provide a longitudinal split in each tube.

32. A method according to claim 30, further comprising the step of providing four twisted wire pairs.
